**Europäisches Patentamt**

**European Patent Office**

**Office européen des brevets**

(19)

(11) Veröffentlichungsnummer: **0 017 900**
**B1**

(12) **EUROPÄISCHE PATENTSCHRIFT**

(45) Veröffentlichungstag der Patentschrift:
19.10.83

(51) Int. Cl.³: **G 01 N 1/10**

(21) Anmeldenummer: **80101881.3**

(22) Anmeldetag: **09.04.80**

(54) Einrichtung zur durchflussproportionalen Entnahme einer Fluidprobe aus einer Fluidleitung.

(30) Priorität: **20.04.79 DE 2915931**

(43) Veröffentlichungstag der Anmeldung:
**29.10.80 Patentblatt 80/22**

(45) Bekanntmachung des Hinweises auf die Patenterteilung:
**19.10.83 Patentblatt 83/42**

(84) Benannte Vertragsstaaten:
**FR GB NL**

(56) Entgegenhaltungen:
**DE-A-2 113 675**
**DE-A-2 729 326**
**FR-A-2 263 501**
**US-A-3 438 262**
**US-A-3 638 498**
**US-A-3 930 414**

(73) Patentinhaber: **BEB Gewerkschaften Brigitta und Elwerath Betriebsführungsgesellschaft mbH, Riethorst 12, D-3000 Hannover 51 (DE)**

(72) Erfinder: **Schlemm, Friedrich, Zweibrückener Strasse 20, D-3000 Hannover-Kirchrode (DE)**

(74) Vertreter: **Schubert, Siegmar, Dipl.-Ing. et al, Patentanwälte Dr. V. Schmied-Kowarzik Dr. P. Weinhold Dipl.-Ing. G. Dannenberg Dr. D. Gudel Dipl.-Ing. S. Schubert Grosse Eschenheimer Strasse 39, D-6000 Frankfurt am Main 1 (DE)**

**0 017 900**

Einrichtung zur durchflußproportionalen Entnahme einer Fluidprobe aus einer Fluidleitung

Die Erfindung betrifft eine Einrichtung zur Entnahme einer Fluidprobe aus einer Fluidleitung nach dem Oberbegriff des Anspruchs 1.

Neben der genauen Erfassung der an Verteilergesellschaften und Endverbraucher abgegebenen Produktmengen eines Fluids, ist auch die Bestimmung von dessen Produktqualität — zur Erfassung von Wärmemengen und der im Produkt vorhandenen, für den Verbraucher verwertbaren Komponenten — mit großmöglicher Genauigkeit von Bedeutung. Diese hat im Hinblick auf die Preisentwicklung noch zugenommen. Eine derartige Auswertung ist bei kontinuierlichen Abnahmen und gleichzeitigem Verbrauch besonderen technischen Anforderungen unterworfen. Sie bereitet auch heute noch Schwierigkeiten und ist mit erheblichem finanziellen Aufwand verbunden. So ist in der Gasversorgung die genaue Ermittlung der zu vergütenden Wärmemengen bei unterschiedlichen Abnahmen und schwankenden Brennwerten noch einer Verbesserung zuzuführen.

Die Wärmemengenermittlung kann heute mit Hilfe von automatischen Kalorimetern zur Brennwertbestimmung und den parallel dazu erfaßten Gasdurchflüssen durchgeführt werden. Dazu werden die gemessenen Werte vor Ort z. B. auf Magnetbändern abgespeichert und können anschließend mittels Computer kontrolliert und ausgewertet werden.

Die Installation von automatischen Kalorimetern und Speichersystemen sowie die Erstellung von Auswertprogrammen und die Verfügbarkeit von Computern ist jedoch sehr kostenintensiv und daher nicht immer anwendbar. Hinzu kommen zeitliche Abhängigkeiten der Brennwertmessung, die die Genauigkeit dieser Wärmemengenermittlungsmethode nicht unwesentlich einschränken.

Neben der vorstehend erwähnten Methode werden auch Gasprobenehmer eingesetzt, in denen der Druck vor der Entnahmeeinrichtung über eine spezielle Druckregelstation genau konstant gehalten werden muß. Von der Genauigkeit und Funktion dieser Druckregelung hängt wesentlich die Qualität der gemittelten Brennwertbestimmung ab. Temperatur- und Qualitätsänderungen des Gases können nicht korrigierend berücksichtigt werden. Ein solches bekanntes Gerät muß von einem Mengenumwerter angesteuert werden, da die Entnahme des Probegases proportional zum Gasdurchfluß im Normzustand erfolgen muß. Das Aufnahmevolumen für das Probegas ist begrenzt und muß daher auf wenige Tage abgestellt werden. Andernfalls (Monatsabnahme) ist der Entnahmezyklus zeitlich zu vergrößern, was zu großen Ungenauigkeiten führen kann. Ein anderes derartiges bekanntes Gerät wird nicht durchflußabhängig, sondern zeitabhängig durch eine vorgegebene Umdrehungszahl gesteuert, die keine durchflußproportionale Entnahme ergibt.

Bei einer Einrichtung der eingangs genannten Gattung wird zur mengenproportionalen Entnahme von Abwasserproben ein Schöpfwerk durch ein Wassermengenmeßgerät gesteuert, von dem mengenproportionale Impulse abgenommen werden und zur Inbetriebnahme des Schöpfwerks über eine Schalteinheit genutzt werden (DE-A-2 113 675). Durch diese Schaltimpulse wird gleichzeitig das Laufwerk einer Zeitschaltuhr in Gang gesetzt, durch die die Dauer der Schöpftätigkeit ebenfalls über die Schalteinheit begrenzt wird. Diese Dauer ist jeweils konstant. Die derart geschöpften Probemengen werden normalerweise in einen Sammelbehälter eingeleitet.

Das elektromotorisch angetriebene Schöpfwerk als Mittel zur Probenentnahme eignet sich jedoch nur für Anwendungsfälle, in denen die Proben aus einer offenen Rinne entnommen und einem offenen Sammelgefäß zugeleitet werden. Es ist daher für Probennahmen von Gas oder Flüssigkeit aus einem geschlossenen, unter Überdruck stehenden Transportsystem nicht geeignet. — Weiterhin ist keine Korrektur der entnommenen Probemengen in Abhängigkeit von bestimmten Zustandsgrößen des Fluids in dem Transportsystem vorgesehen, so daß bei schwankenden Zustandsgrößen des Fluids insbesondere in geschlossenen, unter Überdruck stehenden Transportsystemen mit einer Verfälschung der in dem Sammelgefäß eintretenden Mittelwertbildung gerechnet werden muß.

Zum Stand der Technik gehört ferner eine Einrichtung zur Entnahme von Fluidproben aus einer geschlossenen Leitung mit einer Schalteinheit, die ein Ventil zu einer Entnahme steuert (DE-A-2 729 326). Sie gestattet es, Proben von in Leitungen fließenden, insbesondere heißen Konzentraten zu entnehmen, die radioaktive oder aggressive Stoffe enthalten. Zu diesem Zweck ist zur Entnahme aus einer Bypassleitung ein Ventilblock eingebaut, dessen Ventilkammer vier absperrbare Abgänge aufweist. Davon sind zwei Abgänge mit der Bypassleitung, ein dritter Abgang mit einem Flüssigkeitsbehälter und ein vierter Abgang mit einem Mischbehälter verbunden. Die Absperrventile werden derart geschaltet, daß entweder Konzentrat in die Ventilkammer gelangt oder Flüssigkeit durch die Ventilkammer fließt, die das Konzentrat verdünnt und in den Mischbehälter drückt. Dem Flüssigkeitsbehälter kann dabei ein Be- und Entlüftungsventil zugeordnet sein. Die Probeentnahme verläuft dabei so, daß jeweils zu einem nicht näher definierten Zeitpunkt in der Ventilkammer eine durch die Größe der Ventilkammer vorgegebene Konzentratmente festgehalten wird und verdünnt in den Mischbehälter abgegeben wird. Anschließend ist das System zur nächsten Probennahme bereit. — Das Problem einer durchflußproportionalen Probeentnahme, insbesondere von Gasen ist jedoch bei der bekannten Einrichtung nicht angesprochen.

Weiterhin ist eine Einrichtung zur durchflußproportionalen Entnahme von Proben aus einem Rohrleitungssystem bekannt, in das ein Meßkondensator zur kapazitiven Durchflußmessung

2

**0 017 900**

hineinragt (FR-A-2 263 501). Damit wird ein Flüssigkeitsstrom in Abhängigkeit von der Eintauchtiefe der Elektroden des Kondensators und von dem hydrostatischen Druck gemessen und in eine analoge elektrische Größe umgewandelt. Diese steuert einen Schrittmotor, der mit einer Pumpe zur Probennahme gekuppelt ist.

Diese Einrichtung eignet sich nicht für Entnahmesysteme, die an geschlossene, unter Überdruck stehende und vollständig mit dem Fluid gefüllte Rohrleitungen angeschlossen sind. Eine Korrektur der Entnahme in Abhängigkeit von Zustandsgrößen des Fluids ist nicht vorgesehen.

Aufgabe der Erfindung ist es, eine Einrichtung zu schaffen, die es erlaubt, den Mittelwert einer schwankenden Eigenschaft eines in einer Leitung strömenden Fluids auf der Grundlage von mengenproportional entnommenen Proben zu bestimmen. Soweit ein Produkt nach dem Transport beim Verbraucher zwischengelagert wird, bevor es seinem eigentlichen Bestimmungszweck zugeführt wird, können seine Qualitätsmerkmale durch Analytik oder andere Verfahren ermittelt werden. Anders verhält es sich mit Produkten, die nach einer kontinuierlichen Mengenermittlung direkt dem Verbraucher zugeführt werden. Hier muß eine dem Durchfluß proportionale Qualitätsbestimmung vorgenommen werden. Die Erfindung, wie sie in Anspruch 1 angegeben ist, löst diese Aufgabe.

Die Erfindung ermöglicht somit eine durchflußproportionale Entnahme von Fluidproben, insbesondere von Probegas aus einem Hauptstrom nicht nur unter Annahme bestimmter zeitlicher konstanter Betriebsverhältnisse, sondern auch dann, wenn die Gaszusammensetzung und die Betriebsverhältnisse erheblichen zeitlichen Schwankungen unterworfen sind. Die die Erfindung betreffenden Einrichtungen können im Prinzip ebenfalls für die durchflußproportionale Entnahme von Flüssigkeiten aus einem Hauptflüssigkeitsstrom verwendet werden.

Falls sich während des Entnahmezeitraums wesentliche Parameter (Temperatur, Druck und/oder spezifische Dichte) des zu entnehmenden Fluides ändern, werden diese Änderungen berücksichtigt. Hierzu wird die Schalteinheit von dem Rechner beaufschlagt. Die Zeitvorgaben der Schalteinheit werden über Korrektureingaben vom Rechner so verändert, daß trotz schwankender Betriebsverhältnisse und Änderungen der Fluidqualität (Gasqualität) hohe Genauigkeiten erzielt werden können.

Falls ein Gas entnommen wird, sollte hierbei dessen Temperatur, Druck und spezifische Dichte berücksichtigt werden. Bei der Entnahme einer Flüssigkeit genügt im allgemeinen die Berücksichtigung von deren Druck und spezifischer Dichte.

Sofern als Fluid ein Gas aus der Fluidleitung durchflußproportional entnommen werden soll, braucht dies also in seinem Druck vorher nicht mehr reduziert zu werden, wie dies beim Stand der Technik der Fall ist. Die vom Zähler mit seinem Impulsgeber abgegebenen durchflußproportionalen Impulsfolgen werden direkt vom Zähler abgegriffen (Durchfluß im Betriebszustand) und nicht von einem Mengenumwerter, wie beim Stand der Technik, der den Durchfluß im Normalzustand mißt. Die Impulsfolgen sind zeitlich so abgestimmt, daß in Verbindung mit der Auslegung der Einrichtung längerfristig verlaufende schwankende Betriebsverhältnisse vernachlässigt werden können. Das Auffanggefäß ist vorzugsweise vor Ort fest installiert. Es ist so groß bemessen, daß ein Entnahmevolumen von Proben über einen Monat gegeben ist. Es werden in dieser Zeit beispielsweise etwa 14 800 Entnahmen durchgeführt.

Insbesondere wenn ein Gas aus der Fluidleitung (Hauptleitung) entnommen werden soll, muß das Entnahmesystem vor der Entnahme von im System befindlichen Gasresten befreit werden. Hierzu wird es bevorzugt, wenn in einer Zweigleitung der Entnahmeleitung ein ebenfalls von der Schalteinheit gesteuertes zweites Drosselventil vorgesehen ist. Bei der Entnahme wird dieses zweite Drosselventil von der Schalteinheit zuerst geöffnet und das zu messende Fluid wird bei geschlossenem ersten Drosselventil durch das geöffnete zweite Drosselventil durch die Entnahmeleitung bis kurz vor das Auffanggefäß geleitet. Anschließend wird das zweite Drosselventil geschlossen und das erste Drosselventil kann geöffnet werden, worauf der eigentliche Entnahmevorgang beginnt.

Um auch das Auffanggefäß vor der Entnahme der ersten Probe von darin befindlichen Gasen zu reinigen, wird es zur Entnahme eines Gases bevorzugt, wenn eine Vakuumpumpe an das Auffanggefäß angeschlossen ist, die das Auffanggefäß — bis auf geringe, unschädliche Reste — von dem darin befindlichen Gas leersaugt.

Falls bei der Entnahme einer Flüssigkeit aus der Fluidleitung deren Druck außerhalb vorgegebener Grenzen schwankt, können diese Schwankungen dadurch ausgeglichen werden, daß an das Auffanggefäß eine Druckgasquelle mit gesteuertem Einlaßventil und ein gesteuertes Ablaßventil angeschlossen sind. Durch diese kombinierte Druck- und Überstromregelung kann der Druck im Auffanggefäß so hergestellt werden, daß der Differenzdruck über dem Einlaßventil konstant gehalten wird. Durch den Rechner kann zur Berücksichtigung schwankender Drücke und schwankender spezifischer Gewichte die obige kombinierte Druck- und Überstromregelung jedoch auch entfallen.

Die nachfolgende Beschreibung der Einrichtung geht von der gasförmigen Entnahme aus und geht zum Schluß lediglich auf die speziellen Punkte der Flüssigkeitsentnahme ein.

Die Erfindung wird im folgenden anhand von Ausführungsbeispielen näher erläutert. Es zeigt

Fig. 1 ein Schaltschema der wesentlichen Bauelemente der neuartigen Einrichtung für eine durchflußproportionale Entnahme einer Gasprobe aus einer Hauptgasleitung,

Fig. 2 schematisch die Anordnung der wesentlichen Bauelemente der elektronischen Schalteinheit

3

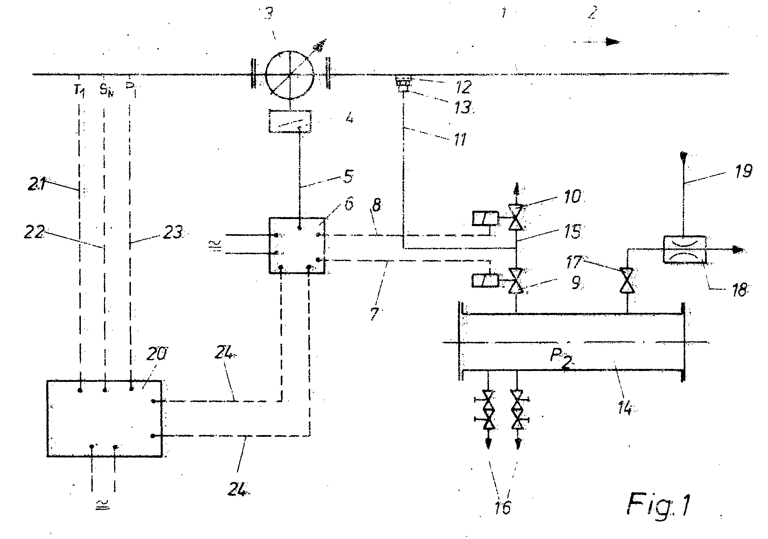

von Fig. 1,

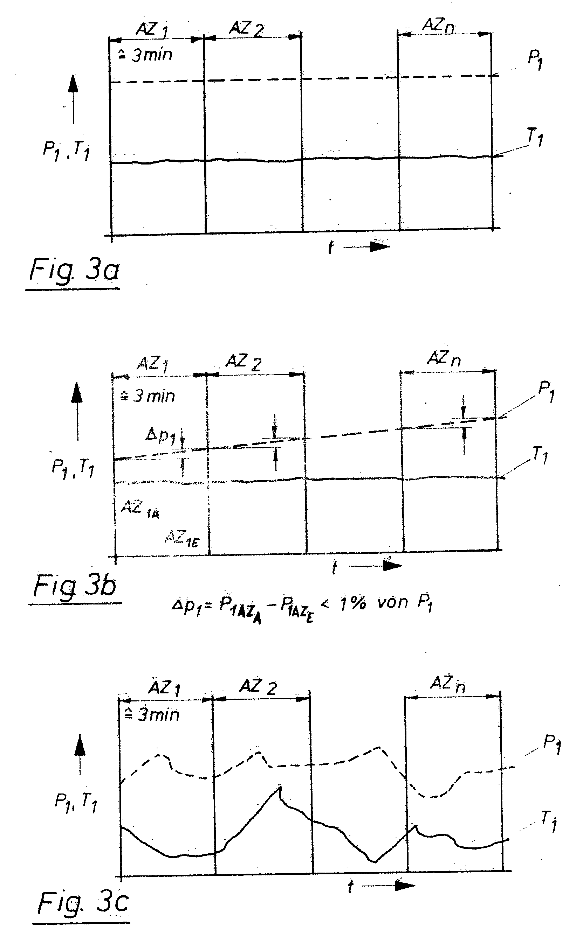

Fig. 3a – 3b eine Darstellung der unterschiedlichen Betriebsverhalten im Betrieb der neuartigen Einrichtung, nämlich bei konstanten Betriebsverhältnissen (Fig. 3a), bei annähernd konstanten Betriebsverhältnissen (Fig. 3b) und bei stark schwankenden Betriebsverhältnissen (Fig. 3c), wobei jeweils über der Zeit der Druck und die Temperatur des in der Hauptgasleitung befindlichen Gases aufgetragen sind,

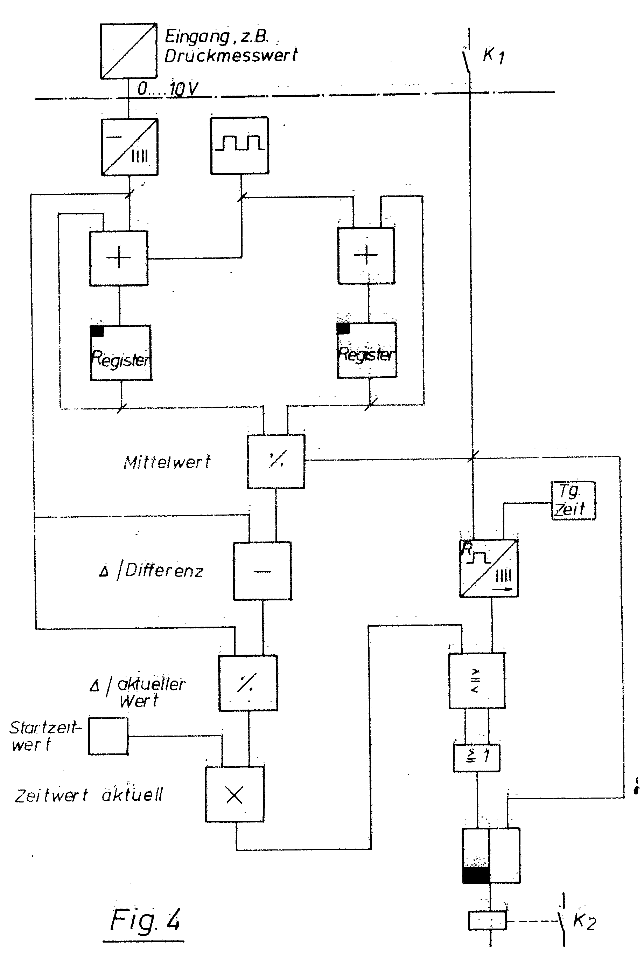

Fig. 4 schematisch die wesentlichen Bauelemente des Korrekturrechners nach Fig. 1,

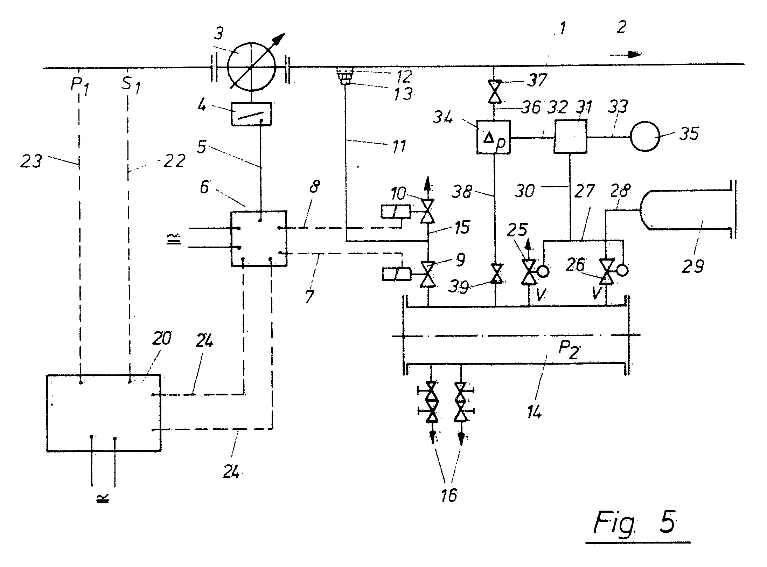

Fig. 5 ein Schema entsprechend Fig. 1 für die durchflußproportionale Entnahme einer Flüssigkeit aus einer Haupt-Flüssigkeitsleitung.

In Fig. 1 strömt ein Gas durch eine Hauptgasleitung 1 in Pfeilrichtung 2. In die Leitung 1 ist ein Gaszähler 3 eingeschaltet. Mit ihm ist ein Impulsgeber 4 verbunden. Durch das in der Leitung 1 strömende Gas wird der Gaszähler durchflußproportional beaufschlagt und der Impulsgeber 4 sendet entsprechende durchflußproportionale Impulse über eine Leitung 5 an eine elektronische Schalteinheit 6. Diese ist über Leitungen 7 und 8 mit einem ersten Dosierventil 9 bzw. einem zweiten Dosierventil 10 verbunden. Beide Dosierventile sind als Drosselventile ausgebildet.

An die Hauptgasleitung 1 ist weiterhin eine Entnahmeleitung 11 angeschlossen, und zwar über eine Filtervorlage 12 an einer Entnahmestelle 13. Die Entnahmeleitung 11 führt über das erste Dosierventil 9 zu einem Auffanggefäß 14. Das zweite Dosierventil 10 ist in einer Zweigleitung 15 der Entnahmeleitung 11 vorgesehen, die in die Atmosphäre mündet.

An das Auffanggefäß 14 sind ein oder mehrere Probeentnahmeanschlüsse 16 angeschlossen sowie über ein Ventil 17 eine Gasstrahl- oder Wasserstrahl-Vakuumpumpe 18, deren Treibmedium über eine Leitung 19 zugeführt wird.

Vor dem Gaszähler 3 können einem Rechner 20 über Leitungen 21, 22, 23 noch die aktuelle Temperatur, die aktuelle Dichte und der aktuelle Druck des Gases in der Hauptgasleitung 1 zugeführt werden. Der Rechner 20 beaufschlagt über Leitungen 24 die Schalteinheit 6.

Das Probegas wird direkt an der Meßstelle 13 der Hauptgasleitung 1 über die feinmaschige Filtervorlage 12 entnommen und über die Leitung 11 den zwei elektrisch zu betätigenden Dosierventilen 9, 10 zugeleitet. Angesteuert über die elektronische Schalteinheit 6 werden die Dosierventile zum Entlüften des Entnahmesystems und zum Befüllen des Auffanggefäßes 14 verwendet. Das Auffanggefäß wird durch die festinstallierte Gasstrahl- oder Wasserstrahl-Vakuum-Pumpe 18 vor Beginn der Probenahmen auf einen Druck von ca. 200 mbar (bezogen auf 0° C) entleert, so daß selbst bei möglichen extremsten Gasqualitätsschwankungen keine nennenswerten Fehler durch das Restgas in der Probeflasche bei der Brennwertbestimmung auftreten können. Das Auffanggefäß wird vor Ort fest installiert und ist in seiner Größe so bemessen, daß im Zusammenwirken mit dem vorgeschalteten Entnahmesystem einen Monat lang Probegas aufgenommen werden kann. Durch die externe Probenahmeanschlüsse 16 kann jederzeit Probegas aus dem Auffanggefäß entnommen werden.

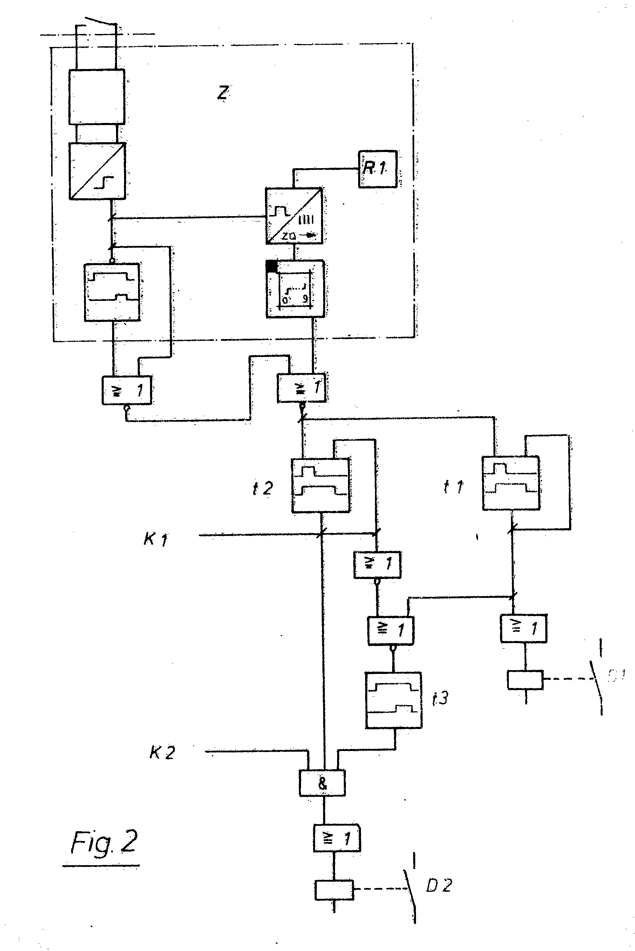

Die elektronische Schalteinheit 6 (Fig. 2) übernimmt die Aufgaben der durchflußproportionalen Schaltung der Dosierventile 9, 10 und die Zeitvorgaben für die Dosierventile.

Die vom Gaszähler 3 kommenden Impulsfolgen werden in einer Zählkette Z gespeichert und als einstellbare untersetzte Schaltfolge an ebenfalls einstellbare Zeitglieder t1 und t2 weitergegeben. Das Zeitglied t1 gibt sofort den Schaltbefehl weiter an Dosierventil 10, das dann für den Zeitraum t1 geöffnet bleibt. Das Gas kann in die Atmosphäre entweichen. Das Entnahmesystem wird vom darin befindlichen Restgas befreit. Nach Ablauf der Zeit t1 schließt das Dosierventil 10 und läßt gleichzeitig das Verzögerungszeitglied t3 anlaufen. Mit Ablauf der Zeit t3 kann das Signal vom Zeitglied t2 über das UND-Glied das Dosierventil 9 für die Restzeit von t2 aufhalten. Das Probegas strömt für diese genau definierte Restzeit in einer den Betriebsverhältnissen angepaßten Menge in das Auffanggefäß 14. Dieser Vorgang kann sich bis 14 880mal im Monat wiederholen. Das entspricht einem Entnahmeintervall von 3 Minuten bei maximaler Drehzahl (entsprechend der maximal durchzusetzenden Gasmenge unter Betriebsverhältnissen) des Gaszählers 3.

Bei der durchflußproportionalen Entnahme wird die Impulsfolge vom Betriebsgaszähler 3 übernommen und somit eine dem unter Betriebsbedingungen erfaßten Durchfluß proportionale Entnahme vorgenommen. Sind Druck und Temperatur konstant (Fig. 3a), so hängt die Gesamtentnahmemenge in einer bestimmten Zeiteinheit nur vom Durchfluß und damit von der Schalthäufigkeit ab. Die jeweilige Einzelentnahmemenge ergibt sich nach

$$Q_N = \frac{514 \cdot K_v \cdot P_1}{2 \sqrt{\rho_N \cdot T_1}} \quad [m^3/h;] \; (1010,8 \text{ mbar}; \; °C) \tag{1}$$

mit

$P_1$ = Druck des Gases in der Hauptgasleitung,
$T_1$ = Temperatur des Gases in der Hauptleitung,
$\rho_N$ = Normdichte des Gases in der Hauptleitung
$K_v$ = ventilspezifischer Durchflußbeiwert

Wenn nun über längere Zeiträume betrachtet (Fig. 3b) der Druck $p_1$ sich ändert aber innerhalb zweier Schaltimpulse annähernd konstant ist und der Einfluß der Gastemperatur untergeordnet ist, kann die Einrichtung unverändert ohne Einbuße der Genauigkeit eingesetzt werden. Durch die Verwendung der Impulsfolgen des Gaszählers — die dem Durchfluß im Betriebszustand proportional sind — wird bei Ansteigen des Betriebsdruckes von z. B. $p_1$ auf $2 \cdot p_1$ zwar nach (1) $Q_N$ doppelt so groß werden, dafür aber die Impulsfolge $l_1$ auf $l_1/2$ abnehmen. Mit der Beziehung

$$\frac{p_1\,(t_1)}{p_1\,(t_2)} = \frac{l_1\,(t_2)}{l_1\,(t_1)} \qquad (2)$$

ist somit sichergestellt, daß bei konstantem Gasdurchfluß im Normzustand und verändertem Betriebsdruck immer die gleiche Probegasmenge entnommen wird. Dem Aufnahmegefäß wird demnach trotz vorstehend zeitlich eingegrenzter Betriebsdruckveränderungen eine dem Hauptgasstrom proportionale Probemenge zugeführt.

Für den Fall, daß zeitlich stark schwankende Betriebsbedingungen (Fig. 3c) wie Druck ($p_1$), Temperatur ($T_1$) und Normdichte ($\varrho_N$) bei der Probegasentnahme ständig berücksichtigt werden müssen, kann die Einrichtung entsprechend Fig. 1 um den Rechner (Minicomputer) 20 erweitert werden. Die übrigen Bauteile der Einrichtung bleiben erhalten. Über Korrekturvorgaben K1 und K2 wird lediglich die Öffnungszeit des Dosierventils 9 variiert und somit eine den Betriebsverhältnissen entsprechende dem Normdurchfluß proportionale Probeentnahme sichergestellt (Fig. 2, 4). Der Minicomputer Abb. 4 übernimmt als Rechenoperator eine Mittelwertbildung der Betriebsgrößen $p_1$, $T_1$ und $\varrho_N$, die ihm als analoge Größen von entsprechenden Meßwertgebern eingegeben werden, über den Zeitraum eines Abtastzyklus und vergleicht entsprechend (1) die Mittelwerte über den Abtastzyklus

$$AZ = \frac{\Sigma\,p_1\,(t_1-t_0)}{\sqrt{\Sigma\,\rho_N\,(t_1-t_0)\cdot\Sigma\,T_1\,(t_1-t_0)}} \qquad (3)$$

mit dem Wert

$$EZ = \frac{p_1\,(t_1)}{\sqrt{\rho_N\,(t_1)\cdot T_1\,(t_1)}} \qquad (4)$$

zum Ende des Abtastzyklus. Die Öffnungszeit ($t_2$) für das Dosierventil 9 wird dann nach der Beziehung korrigiert:

$$\frac{AZ}{EZ} \cdot t_2\ [sec]. \qquad (5)$$

Die Zeit kann also verkürzt oder verlängert werden. Ist z. B. nur der Betriebsdruck als veränderliche Größe zu berücksichtigen, erfolgt die Korrektur nach

$$\frac{\Sigma\,p_1\,(t_1-t_0)}{p_1\,(t_1)} \cdot t_2. \qquad (6)$$

Die durchflußproportionale Entnahme von Flüssigkeiten kann im wesentlichen mit den gleichen Ausrüstungen vorgenommen werden. Bei der Entnahme, die in Abhängigkeit der vom Flüssigkeitszähler abgegebenen Impulsfolgen erfolgt (proportional zur Durchsatzmenge), muß die Durchflußformel für Ventile bei Flüssigkeiten beachtet werden

$$Q = 31{,}6 \cdot K_v \cdot \sqrt{\frac{\Delta p}{\rho_1}}. \qquad (7)$$

Wenn der Betriebsdruck am Zähler ($p_1$) und die Wichte ($\rho_1$) annähernd konstant sind und bei einem drucklosen Entnahmegefäß ($p_2$) auch

$$\Delta p = p_1 - p_2 \qquad (8)$$

konstant ist, kann das System ohne Korrekturrechner benutzt werden. Es entfallen der Ejektor 18 und das Aufnahmegefäß 14 kann kleiner gehalten werden.

In Fig. 5 sind die der Anordnung nach Fig. 1 entsprechenden Bauteile mit denselben Bezugsziffern versehen. Anstelle der Vakuumpumpe 18 nach Fig. 1 sind bei der Anordnung nach Fig. 5 für die Entnahme einer Flüssigkeit aus der Haupt-Flüssigkeitsleitung 1 an das Aufnahmegefäß 14 zwei Ventile 25, 26 angeschlossen, die über eine Leitung 27 miteinander in Verbindung stehen. Eine Leitung 28 verbindet das Ventil 26 mit einer Druckgasquelle 29 für neutrales Gas.

Die Leitung 27 ist über eine weitere Leitung 30 mit einem Regler 31 verbunden, der seinerseits über weitere Leitungen 32 und 33 mit einem Meßumformer 34 bzw. mit einem Sollwertsteller 35 in Verbindung steht. Der Meßumformer 34 ist über eine weitere Leitung 36 mit einem Ventil 37 an die Hauptleitung 1 angeschlossen. Der Meßumformer 34 ist über eine weitere Leitung 38 und ein Ventil 39 ebenfalls an das Auffanggefäß 14 angeschlossen. Die übrigen Anordnungen entsprechen der Schaltung nach Fig. 1.

Wenn der Druck $p_1$ am Flüssigkeitszähler 3 schwankt, kann durch eine Zusatzeinrichtung (Fig. 5) durch angepaßte Druckbeaufschlagung im Auffanggefäß 14 eine Kompensation erreicht werden. Geht nach (8) der Druck $p_1$ nach oben, wird $p_2$ über die Druck-Überströmregelung 31, 26, 29 nachgefahren und $\Delta p$ konstant gehalten. Der Druck wird von der Gasdruckflasche 29 (neutrales Gas) vorgehalten und stützt nach Bedarf den Druck im Auffanggefäß 14. Zu hoher Druck im Auffanggefäß kann über das zweite Ventil 25 abgegeben werden. Die Ventile 25, 26 sind in splitrange geschaltet.

Ist über den Druck hinaus auch $\varrho_1$ mit in die Korrektur einzubeziehen, kann das über den Rechner 20 erfolgen. Korrektur für $\Delta p$ und $\varrho_1$ erfolgen dann gemeinsam über den Korrekturrechner 20. In diesem Fall entfällt die kombinierte Drucküberströmregelung.

**Patentansprüche**

1. Einrichtung zur Entnahme einer Fluidprobe aus einer Fluidleitung (1), mit einem an die Fluidleitung angeschlossenen Durchflußzähler (3), der einen Impulsgeber (4) enthält, der eine durchflußproportionale Impulsfolge an eine ein Zeitglied (t2, &) umfassende Schalteinheit (6) abgibt, welche Mittel (9) zur durchflußproportionalen Entnahme von Proben aus der Fluidleitung zu von der Impulsfolge bestimmten Zeitpunkten während jeweils einer vorgegebenen von dem Zeitglied bestimmten Zeitdauer steuert, und mit einem Auffanggefäß (14) für die Proben, dadurch gekennzeichnet, daß als Mittel zur durchflußproportionalen Entnahme von Proben ein Dosierventil (9) in einer Entnahmeleitung (11) angeordnet ist, die an der Fluidleitung (1) angeschlossen ist, und daß die Schalteinheit (6) Schaltkreise zur Veränderung der von dem Zeitglied gesteuerten Öffnungszeit des Dosierventils in Abhängigkeit von Korrektursignalen (K1, K2) aufweist, die von einem mit Daten der Temperatur, des Drucks und/oder der Dichte des Fluidstroms in der Fluidleitung (1) gespeisten Rechner (20) den genannten Schaltkreisen zugeführt sind.

2. Einrichtung nach Anspruch 1, dadurch gekennzeichnet, daß in einer Zweigleitung (15) der Entnahmeleitung (11) ein ebenfalls von der Schalteinheit (6) gesteuertes Drosselventil (10) vorgesehen ist.

3. Einrichtung nach Anspruch 1 oder 2, dadurch gekennzeichnet, daß zur Entnahme eines Gases aus dem Auffanggefäß (14) eine Vakuumpumpe (18, 19) an das Auffanggefäß (14) angeschlossen ist.

4. Einrichtung nach Anspruch 1 bis 3, dadurch gekennzeichnet, daß zur Entnahme einer Flüssigkeit aus dem Auffanggefäß (14) an dieses eine Druckgasquelle (29) mit gesteuertem Einlaßventil (26) und ein gesteuertes Ablaßventil (25) angeschlossen sind und daß das Einlaßventil (26) und das Ablaßventil (25) in Abhängigkeit von dem Differenzdruck zwischen Fluidleitung (1) und Auffanggefäß (14) gesteuert sind.

5. Einrichtung nach Anspruch 1, dadurch gekennzeichnet, daß eine Gasentnahme aus der Fluidleitung (1) unmittelbar über das Dosierventil (9) ohne Druckreduzierung in Flußrichtung vor dem Dosierventil erfolgt.

**Claims**

1. Equipment for extracting samples of a fluid from a fluid supply line (1) having a fluid counter (3), which equipment comprises an impulse transmitter (4) which causes flow proportional impulse signals to be transmitted to a switch unit (6) incorporating a timer means (t2), and means (9) by which flow proportional extraction of samples from the line (1) into a collecting vessel (14) is effected at times specified by the the impulse signals for periods predetermined by the setting of the timing means (t2), characterised in that means (9) comprises a valve (9) provided in a sample extraction line (11) which is connected to the fluid supply line (1) and in that the switch unit (6) incorporates circuits for variation of the opening times of the valve (9) depending on correction signals (K1, K2) which are fed to the circuits by a calculator (20) fed with data of temperature, pressure and/or density of the fluid stream in the line (1).

2. Equipment as claimed in claim 1, characterised in that a throttle valve (10) controlled by the switch unit (6) is provided in a branch (15) of the sample extraction line (11).

3. Equipment as claimed in either of claims 1 or 2, characterised in that a vacuum pump (18, 19) is connected to the collecting vessel (14) for collecting gas from the vessel (14).

4. Equipment as claimed in any one of claims 1 to 3, characterised in that a pressure gas source (29) is provided for the extraction of fluid from the collecting vessel (14) with a controlled inlet valve (26) and a controlled outlet valve (25) connected to the vessel (14) and in that the inlet valve (26) and the outlet valve (25) are controlled depending upon the differential pressure between the fluid supply line (1) and the collecting vessel (14).

5. Equipment as claimed in claim 1, characterised in that gas extraction from the fluid supply line (1) is effected directly via the valve (9) without any pressure reduction in the flow direction above the valve (9).

## Revendications

1. Dispositif pour le prélèvement d'un échantillon de fluide dans une conduite de fluide (1), comportant un débit-mètre (3) raccordé à la conduite de fluide et qui contient un émetteur d'impulsions (4), qui délivre une succession d'impulsions, proportionnelles au débit, à une unité de commande (6), comprenant un organe temporisé (t2, &) qui commande un organe (9) pour le prélèvement proportionnel au débit dans la conduite de fluide, aux moments déterminés par la succession d'impulsions, chaque fois pendant une durée précisée d'avance, déterminée par l'organe temporisé et comprenant aussi un récipient de réception des échantillons, dispositif caractérisé en ce que, comme organe pour le prélèvement, proportionnel au débit, des échantillons, on dispose une soupape doseuse (9) sur une conduite (11) de prélèvement, qui est raccordée à la conduite de fluide (1), et que l'unité de commande (6) comporte des circuits de commande destinés à modifier la durée d'ouverture de la soupape doseuse, commandée par l'organe temporisé, en fonction de signaux de correction (K1, K2), qui sont fournis aux circuits de commande mentionnés par un calculateur (20) qui reçoit les données nécessaires de température, de pression et/ou de densité du courant de fluide qui se trouve dans la conduite (1).

2. Dispositif suivant la revendication 1, caractérisé en ce qu'il est prévu, sur une conduite (15) dérivée de la conduite de prélèvement (11), une soupape de réglage (10), commandée également par l'unité de commande (6).

3. Dispositif suivant l'une des revendications 1 et 2, caractérisé en ce que, pour prélever un gaz dans le récipient de réception (14), on raccorde à ce vase de réception (14), une pompe à vide (18, 19).

4. Dispositif suivant l'une quelconque des revendications 1 à 3, caractérisé en ce que, pour prélever un liquide dans le vase de réception (14), on raccorde, sur ce dernier, une source de gaz sous pression (29) comportant une soupape d'admission (26) commandée et une soupape de décharge (25), commandée, et que la soupape d'admission (26) et la soupape de décharge (25) sont commandées en fonction de la différence de pression entre la conduite de fluide (1) et le vase de réception (14).

5. Dispositif suivant la revendication 1, caractérisé en ce qu'un prélèvement de gaz dans la conduite de fluide (1) s'opère directement par l'intermédiaire de la soupape doseuse (9) sans réduction de la pression dans le sens de l'écoulement avant la soupape doseuse.

Fig.1

*Fig. 2*

Fig. 3a

Fig 3b

$$\Delta p_1 = P_{1AZ_A} - P_{1AZ_E} < 1\% \; von \; P_1$$

Fig. 3c

Fig. 4

Fig. 5